# EUROPEAN PATENT SPECIFICATION

(11) **EP 4 044 755 B1**
(45) Date of publication and mention of the grant of the patent: **12.02.2025**
(21) Application number: 20900056.1
(22) Date of filing: 03.12.2020
(51) Int. Cl.: H04W 76/10, H04W 52/02, H04W 76/14, H04W 84/20

(54) **DEVICE NETWORKING METHOD, ELECTRONIC DEVICE, AND SYSTEM**
VORRICHTUNGSVERNETZUNGSVERFAHREN, ELEKTRONISCHE VORRICHTUNG UND SYSTEM
PROCÉDÉ DE MISE EN RÉSEAU, DISPOSITIF ÉLECTRONIQUE ET SYSTÈME ASSOCIÉ

(30) Priority: 11.12.2019 CN 201911268282
(43) Date of publication of application: 17.08.2022
(73) Proprietor: Huawei Technologies Co., Ltd., Shenzhen, Guangdong 518129 (CN)
(72) Inventor: ZHU, Chong, Shenzhen, Guangdong 518129 (CN); HU, Shiyao, Shenzhen, Guangdong 518129 (CN); LI, Min, Shenzhen, Guangdong 518129 (CN)
(74) Representative: MERH-IP Matias Erny Reichl Hoffmann Patentanwälte PartG mbB
(86) International application number: PCT/CN2020/133591
(87) International publication number: WO 2021/115193

(56) References cited:
- CN-A- 1 701 570
- CN-A- 104 837 168
- CN-A- 105 182 774
- JP-A- 2004 080 400
- US-A1- 2003 195 019
- US-A1- 2005 262 216
- US-A1- 2015 358 831
- US-A1- 2017 055 104

## Description

### TECHNICAL FIELD

This application relates to the field of communications technologies, and in particular, to a device networking method, an electronic device, and a system.

### BACKGROUND

With development of smart home technologies, a user or a family usually has a plurality of electronic devices that can communicate with each other. Various electronic devices generally have respective device features. For example, a mobile phone has good portability, a television screen has a good display effect, and a speaker has a good sound quality effect. To full use device features of different electronic devices, a plurality of electronic devices may be networked, so that the plurality of electronic devices are interconnected to work cooperatively.

A networking process of a start topology structure is used as an example. To connect electronic devices in a user's home, a preset electronic device (for example, a television, a router, or a mobile phone) may be determined as a master device (master). Further, each electronic device other than the master device may be used as a slave device (slave) to establish a communications connection (for example, a Bluetooth connection or a Wi-Fi connection) to the master device, to form a local area network of a star topology structure. In this way, as a central node, the master device may be configured to manage and control each slave device in the local area network, to complete a corresponding work task.

However, once an exception, for example, a disconnection, a fault, or a power failure occurs on the master device in the network, the master device cannot continue to manage and control each slave device in the network. Consequently, the entire network cannot work normally, and user experience deteriorates.

In US 2005/262216 A1, a master/slave switch controlling section of a deivce compares battery information to determine whether a slave device is more suitable as the master device than the device. Specifically, the device whose ratio of the remaining amount of battery is larger or whose estimated remaining time for operation is longer is determined as the device more suitable as the master device.

US 2003/195019 A1 discloses that a master could periodically broadcast its power reserve. The slaves would then compare the master's power reserve with their own power reserves, and if they had more power, they could send a message requesting to switch roles with the master.

US 2015/358831 Al discloses a communication control apparatus including: a selection unit that uses information related to one or more terminal apparatuses operable as an access point for a small cell to select a master terminal operating the small cell and one or more sub-master terminals; and a control unit that instructs the at least one sub-master terminal to be involved in an operation of the small cell according to occurrence of an event disturbing the operation of the small cell by the master terminal.

### SUMMARY

This application provides a device networking method, an electronic device, and a system, to prolong duration of a network after networking and stability of the network, and improve user experience.

To achieve the foregoing objectives, the following technical solutions are used in this application.

According to a first aspect, this application provides a device networking method, including: A first device determines a second device as a master device in a communications system, where the second device is a device of a first type, the first device is a device of a second type, the device of the first type is a device (for example, a router) that is powered by an external power supply, and the device of the second type is a device (for example, a mobile phone) that is powered by a battery; then, the first device is used as a slave device to establish a communications connection to the second device; the first device determines a third device as a new master device in the communications system when an exception occurs on the second device (that is, an exception occurs on a current master device), where the third device is a device of the second type; and the first device is used as the slave device to establish a communications connection to the third device (namely, a new master device).

It can be seen that, when a master device in a communications system is selected for device networking, a device of a first type may be preferably determined as the master device in the communications system to construct a network of a star structure, to ensure duration of the network and stability of the network. When an exception occurs on the device of the first type, the master device may be migrated from the device of the first type to a device of a second type, so that the master device in the network is dynamically adjusted, to ensure that duration of the network and stability of the network are optimal.

In a possible implementation, that a first device determines a second device as a master device in a communications system includes: The first device queries whether the communications system includes a device of the first type; and if the communications system includes a device of the first type, the first device determines the second device as the master device in devices of the first type. There may be one or more devices of the first type in the communications system, or the communications system may not include a device of the first type.

In a possible implementation, the first device stores a device information list, the device information list records device information of devices, for example, device types of the devices, in the communications system. In this case, that the first device queries whether the communications system includes a device of the first type includes: The first device may query, based on the device types of the devices in the device information list, whether a current communications system includes a device of the first type.

In a possible implementation, that the first device determines the second device as the master device in devices of the first type includes: If the devices of the first type include only the second device, it indicates that a current communications system includes only one device of the first type, and the first device may determine the second device as the master device; or if the devices of the first type include a plurality of devices, the first device selects, according to a preset master device decision algorithm, the second device from the plurality of the devices of the first type as the master device.

In other words, when device networking is performed in the communications system, an electronic device of the first type may be preferably selected as the master device in the network when the communications system includes the electronic device of the first type. In one aspect, when the electronic device of the first type is used as the master device, a probability that an exception such as a power failure occurs is relatively low. This can ensure stability of the entire network after networking. In another aspect, when the electronic device of the first type is used as the master device, power consumption overheads of the electronic device of the second type in the network can be reduced, thereby prolonging duration of the entire network after networking.

In a possible implementation, that the first device determines a third device as a new master device in the communications system when an exception occurs on the second device includes: When an exception occurs on the second device, the first device queries whether the current communications system includes a device of the first type; and if the current communications system does not include a device of the first type, the first device determines the third device as the new master device in devices of the second type. There may be one or more devices of the second type in the communications system, or the communications system may not include a device of the second type.

In a possible implementation, that the first device determines the third device as the new master device in devices of the second type includes: The first device determines the third device as the new master device based on device information of devices of the second type recorded in the device information list.

For example, the third device is a device, in the devices of the second type, whose electric quantity is greater than an electric quantity threshold; and/or the third device is a device, in the devices of the second type, whose wakeup duration is greater than a time threshold; and/or the third device is a device, in the devices of the second type, whose wakeup frequency is greater than a frequency threshold.

In other words, when device networking is performed in the communications system, and when the communications system does not include an electronic device of the first type, an electronic device that has relatively low power consumption overheads and relatively long network duration may be preferably selected as the master device in electronic devices of the second type based on parameters, such as wakeup duration and an electric quantity, of each electronic device of the second type, thereby ensuring stability of an entire network after networking.

In a possible implementation, after the first device as a slave device establishes a communications connection to the second device, the method further includes: The first device periodically sends device information of the first device to the second device, and obtains, from the second device, a latest device information list in the communications system. In this way, a device information list stored in each slave device in the communications network and a device information list stored in a current master device are synchronized with each other and are in a latest state. Once an exception occurs on the master device, each slave device may reselect, according to the latest device information list, a master device for networking.

For example, because the first device is an electronic device of the second type, an interval in which the first device sends the device information to the second device may be set to be the same as a heartbeat interval of the first device. This can reduce a quantity of wakeup durations for which the first device is woken up from a sleep state to a wakeup state, and power consumption of the first device.

In a possible implementation, after the first device as a slave device establishes a communications connection to the second device, the method further includes: If the first device receives a master device exception message sent by another slave device in the communications system, the first device may determine that an exception occurs on the second device (namely, a current master device); or if the first device detects that the communications connection to the second device is disconnected (for example, the first device detects that the communications connection to the second device times out), the first device may determine that an exception occurs on the second device (namely, the current master device). Therefore, each electronic device in the communications network is triggered to start to reselect a new master device for networking.

In a possible implementation, after the first device as the slave device establishes a communications connection to the third device, the method further includes: If the first device receives a master device migration message sent by the third device, it indicates that the third device is inappropriate to be used as the master device to continue running in this case, and the first device may re-determine, in the current communications system, a new master device for networking.

In a possible implementation, after the first device as a slave device establishes a communications connection to the second device, the method further includes: When an exception occurs on the second device (namely, the current master device), the first device may alternatively determine the first device as a new master device in the current communications system, for example, when the first device is a device of the second type with a highest electric quantity in the current communications system, the first device may determine the first device as the new master device in the current communications system. Further, the first device may be used as the master device to establish a communications connection to another device in the communications system, to form a network of a star topology structure.

In a possible implementation, after the first device determines the first device as a new master device in the communications system, the method further includes: The first device detects whether a running status of the first device meets a preset master device migration condition; and if the preset master device migration condition is met, it indicates that the first device is inappropriate to be used as the master device to continue running in this case, and the first device may send a master device migration message to another device in the communications system, to trigger each electronic device in the communications network to start to reselect a new master device for networking.

For example, the master device migration condition includes: An electric quantity of the master device is less than an electric quantity threshold; and/or a wakeup duration of the master device is less than a time threshold; and/or wakeup frequency of the master device is less than a frequency threshold.

It can be learned that, after a device of the second type as the master device runs in the communications network, the device of the second type may detect a running status of the device of the second type in real time to determine whether the device of the second type is appropriate to be used as the master device to continue working. If the device of the second type is no longer appropriate to be used as the master device to continue working, an electronic device in the communications network may be triggered to start to reselect an optimal electronic device as a new master device for networking and running, so that the master device in the network is dynamically adjusted. In this way, stability of the network and duration of the network are optimal.

According to a second aspect, this application provides an electronic device, including one or more processors, one or more memories, a communications module, and one or more computer programs. The processor is coupled to a touchscreen, the communications module, and the memory. The one or more computer programs are stored in the memory. When the electronic device runs, the processor executes the one or more computer programs stored in the memory, to enable the electronic device to perform any one of the foregoing device networking methods.

According to a third aspect, this application provides a communications system, including one or more devices of a first type and one or more devices of a second type. A device of the first type is a device that is powered by an external power supply, and a device of the second type is a device that is powered by a battery. When a first device is a device of the second type, the first device may perform any one of the foregoing device networking methods.

According to a fourth aspect, this application provides a computer-readable storage medium, including computer instructions. When the computer instructions are run on an electronic device, the electronic device is enabled to perform any one of the foregoing device networking methods.

According to a fifth aspect, this application provides a computer program product. When the computer program product is run on an electronic device, the electronic device is enabled to perform any one of the foregoing device networking methods.

It may be understood that the electronic device according to the second aspect, the communications system according to the third aspect, the computer-readable storage medium according to the fourth aspect, and the computer program product according to the fifth aspect are all used to perform the corresponding method provided above. Therefore, for beneficial effects that can be achieved, refer to the beneficial effects in the corresponding method provided above. Details are not described herein again.

### BRIEF DESCRIPTION OF DRAWINGS

FIG. 1 is a schematic architectural diagram of a communications system according to an embodiment of this application;
FIG. 2 is a first schematic structural diagram of an electronic device according to an embodiment of this application;
FIG. 3 is a schematic flowchart of a device networking method according to an embodiment of this application;
FIG. 4 is a first schematic diagram of an application scenario of a device networking method according to an embodiment of this application;
FIG. 5 is a second schematic diagram of an application scenario of a device networking method according to an embodiment of this application;
FIG. 6 is a third schematic diagram of an application scenario of a device networking method according to an embodiment of this application;
FIG. 7 is a fourth schematic diagram of an application scenario of a device networking method according to an embodiment of this application; and
FIG. 8 is a second schematic structural diagram of an electronic device according to an embodiment of this application.

### DESCRIPTION OF EMBODIMENTS

The following describes implementations of embodiments in detail with reference to accompanying drawings.

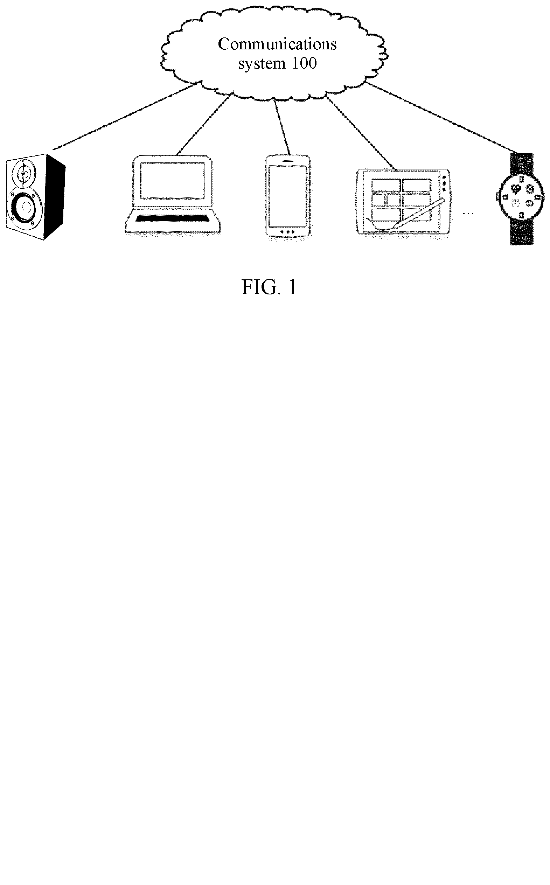

A device networking method provided in an embodiment of this application may be applied to a communications system 100 shown in FIG. 1. The communications system 100 may include N (N is an integer greater than 1) electronic devices.

The electronic devices may be specifically electronic devices of a first type, or may be electronic devices of a second type.

An electronic device of the first type is an electronic device (which may also be referred to as external power supplied equipment or a device of a first type) that is powered by using an alternating current by an external power supply. For example, the electronic device of the first type may include a television, a router, a desktop computer, a speaker, or the like. When working, the electronic device of the first type may obtain, by using an external power supply, electric energy provided by an electric power company through a plug, a data line, or the like. Therefore, after being connected to the external power supply, the electronic device of the first type may always be in a standby state, and a user usually does not have a special requirement on power consumption of this type of electronic device.

An electronic device of the second type is an electronic device (which may also be referred to as a battery device or a device of a second type) that is powered by a battery. For example, the electronic device of the second type may include a mobile phone, a tablet computer, a notebook computer, or the like. When working, the electronic device of the second type is powered by using a battery. For example, if a mobile phone is an electronic device of the second type, after a screen of the mobile phone is turned off, the mobile phone may enter a standby state (which may also be referred to as a sleep state), and when the mobile phone needs to interact with another electronic device, the mobile phone needs to first wake up a processor (for example, a CPU) and a related communications module (for example, a Wi-Fi chip) of the mobile phone. When the processor or the communications module is woken up for a relatively large quantity of times, power consumption of the mobile phone is increased, thereby shortening a standby time. Therefore, when using the electronic device of the second type, the user usually expects that power consumption of this type of electronic device is as low as possible.

In this embodiment of this application, the communications system 100 may include X electronic devices 101 of the first type and Y electronic devices 102 of the second type, where X + Y = N. The electronic devices 101 and the electronic devices 102 may establish a network according to a specific topology structure and a networking algorithm, so that electronic devices in the communications system 100 can communicate with each other.

A star topology structure is used as an example. In the star topology structure, each node in a network may be connected to a master device (master, which may also be referred to as a central node) in a point-to-point manner, a node connected to the master device may be referred to as a slave device, and the master device is configured to control and manage each slave device in the network in a centralized manner. In this embodiment of this application, an electronic device 101 or an electronic device 102 in the communications system 100 may be used as the master device for networking. After the master device in the communications system 100 is determined, another electronic device in the communications system 100 may be used as a slave device to establish a communications connection to the master device. In this way, a networking process of the communications system 100 is completed.

In this embodiment of this application, each electronic device in the communications system 100 may store and maintain a device information list. The device information list may include device information of each electronic device in the communications system 100. For example, the device information may include one or more pieces of information that reflects the device status and that includes a device name, a device type (for example, a first type or a second type), electric quantity information, wakeup duration, or wakeup frequency. For the electronic device 102 of the second type, the electric quantity information is a remaining battery capacity or an electric quantity percentage of the electronic device 102. For the electronic device 101 of the first type, because the user usually does not have a requirement on an electric quantity of this type of electronic device, the electric quantity information of the electronic device 101 may be set to 100% in the device information list, or a parameter of the electric quantity information may not be set in the device information list of the electronic device 101. The wakeup duration is working duration after the processor in the electronic device is woken up within a specific time period. The wakeup frequency is a quantity of times for which the processor in the electronic device is woken up within a specific time period.

For example, a device information list stored in an electronic device A is shown in Table 1. The electronic device A may query, by using the device information list, a device status, such as a specific name, a type, an electric quantity, and wakeup duration, of another electronic device (for example, a speaker 1, a router, or a mobile phone 1) in the communications system 100. In other words, each electronic device may learn of a latest device status of another electronic device in the communications system 100 by using a device information list stored in the electronic device.

**Table 1**

| Device name | Device type | Electric quantity information | Wakeup duration (latest 24 hours) | ... |
|---|---|---|---|---|
| Speaker 1 | First type | 100% | 3 hours and 10 minutes | ... |
| Router | First type | 100% | 24 hours | ... |
| Mobile phone 1 | Second type | 67% | 5 hours and 46 minutes | ... |

It should be noted that Table 1 may also include device information of the electronic device A. In addition, the device information shown in Table 1 is merely an example for description. It may be understood that the device information may further include a device model, a network access time point of the device, an IP (internet protocol, Internet Protocol) address, a MAC (media access control, media access control) address, a service provided by the device, customized service information, and the like. A person skilled in the art may set the device information based on actual experience or an actual application scenario. This is not limited in this embodiment of this application.

Therefore, when each electronic device in the communications system 100 is in networking, each electronic device may obtain a latest device status of each electronic device in the communications system 100 according to the device information list stored in the electronic device. Further, the electronic device may determine, based on the latest device status of each electronic device in the communications system 100, a specific electronic device as a master device in the current communications system 100.

The electronic device A is still used as an example. After querying the device information list shown in Table 1, the electronic device A may determine whether the communications system 100 includes an electronic device 101 of a first type. If the electronic device 101 of the first type is included, the electronic device A may preferably determine the electronic device 101 of the first type (for example, a router) as the master device in the communications system 100.

For example, when there are a plurality of electronic devices 101 of the first type, the electronic device A may determine an electronic device 101 with an earliest network access time point as the master device during this networking. For another example, when there are a plurality of electronic devices 101 of the first type, the electronic device A may determine, according to a preset priority sequence, an electronic device 101 with a highest priority as the master device during this networking.

Usually, an electronic device as the master device generally has relatively high load in a network. However, when the electronic device 101 of the first type is used as the master device in the communications system 100, the electronic device 101 may be powered by an external power supply, and therefore, when the electronic device 101 as the master device runs in a high-load state, stability is relatively high, a probability that an exception such as a power failure occurs on the master device is relatively low, and duration of a network after device networking is relatively long.

Alternatively, if the communications system 100 does not include an electronic device 101 of the first type, the electronic device A may determine one master device from a plurality of electronic devices 102 based on device information of electronic devices 102 of the second type in the foregoing device information list.

For example, the electronic device A may determine, as the master device during this networking based on electric quantity information of different electronic devices 102 in Table 1, an electronic device 102 whose electric quantity is greater than a preset value or whose electric quantity is highest. In other words, when the electronic device 101 of the first type is not included, an electronic device in the communications system 100 may determine an electronic device 102 of the second type with a relatively high electric quantity as the master device during networking, to reduce a case in which an exception occurs on the master device due to a relatively low electric quantity after networking. Therefore, stability of a network after networking and duration of the network are ensured.

For another example, the electronic device A may determine, as the master device during this networking based on wakeup duration of different electronic devices 102 in Table 1, an electronic device 102 whose wakeup duration is greater than a preset value or whose wakeup duration is longest. In other words, when the electronic device 101 of the first type is not included, an electronic device in the communications system 100 may determine an electronic device 102 of the second type with relatively long wakeup duration as the master device during networking. When an electronic device 102 works as the master device in a wakeup state, the processor and related communications module do not need to be woke up to avoid increasing power consumption. Therefore, selecting the electronic device 102 with the relatively long wakeup duration as the master device can reduce power consumption overheads during networking, to ensure stability of a network after networking and duration of the network.

Certainly, the electronic device A may further select an electronic device 102 of the second type as the master device to start networking with reference to electric quantity information, wakeup duration, or other device information (for example, wakeup frequency or a current wakeup state) of each electronic device 102. This is not limited in this embodiment of this application.

In addition to the electronic device A, all other electronic devices in the communications system 100 may determine, according to the foregoing method and according to device information lists, the master device in the communications system 100 during this networking. In this way, the determined master device may establish a communications connection (for example, a Wi-Fi connection or a Bluetooth connection) to another electronic device (namely, a slave device), to complete this networking process.

After the networking is successful, the master device in the communications system 100 can start to properly control and manage each slave device in the network. If it is detected that a current running status of the master device meets a preset master device migration condition, for example, an electric quantity of the master device is relatively low or the master device enters a long-term sleep state, it indicates that the electronic device currently used as the master device is no longer suitable for continuous running as the master device. In this case, the master device may indicate each slave device in the communications system 100 to re-determine, according to the foregoing method, a new master device to perform networking, to ensure stability of a network after re-networking and duration of the network.

In other words, in the device networking method provided in this embodiment of this application, the master device in the network may be further dynamically adjusted based on the running status of the master device, that is, an optimal electronic device in the communications system 100 may be selected in real time as the master device for networking and running. This improves stability and duration of the network.

For example, the electronic device in the foregoing communications system 100 may be a mobile phone, a tablet computer, a desktop computer, a laptop computer, a notebook computer, an ultra-mobile personal computer (Ultra-mobile Personal Computer, UMPC), a handheld computer, a netbook, a personal digital assistant (Personal Digital Assistant, PDA), a wearable electronic device, a vehicle-mounted device, a virtual reality device, or the like. This is not limited in this embodiment of this application.

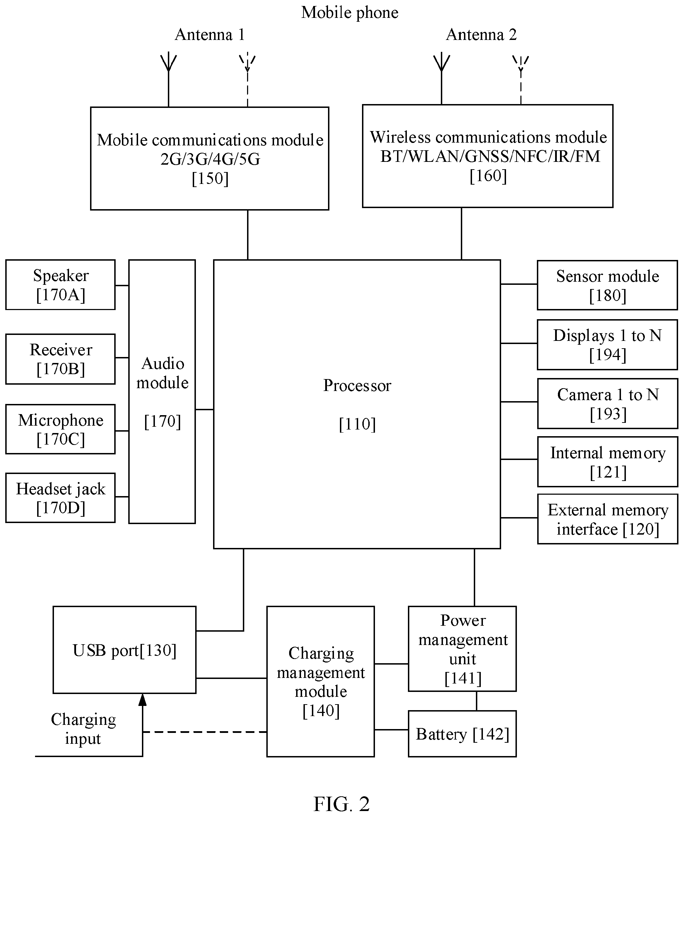

For example, the foregoing electronic device is a mobile phone. FIG. 2 is a schematic structural diagram of the mobile phone.

The mobile phone may include a processor 110, an external memory interface 120, an internal memory 121, a universal serial bus (universal serial bus, USB) port 130, a charging management module 140, a power management unit 141, a battery 142, an antenna 1, an antenna 2, a mobile communications module 150, a wireless communications module 160, an audio module 170, a speaker 170A, a receiver 170B, a microphone 170C, a headset jack 170D, a sensor module 180, a camera 193, a display 194, and the like.

It may be understood that an illustrated structure in this embodiment of this application does not constitute a specific limitation on the mobile phone. In some other embodiments of this application, the mobile phone may include more or fewer components than those shown in the figure, combine some components, split some components, or have different component arrangements. The components shown in the figure may be implemented by using hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

A memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor 110 may directly invoke the instructions or the data from the memory. This avoids repeated access and reduces waiting time of the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) port, and/or the like.

The charging management module 140 is configured to receive charging input from a charger. The charger may be a wireless charger or a wired charger. In some embodiments of wired charging, the charging management module 140 may receive a charging input from a wired charger through the USB port 130. In some embodiments of wireless charging, the charging management module 140 may receive a wireless charging input by using a wireless charging coil of the mobile phone. The charging management module 140 supplies power to the electronic device by using the power management unit 141 while charging the battery 142.

The power management unit 141 is configured to connect the battery 142 and the charging management module 140 to the processor 110. The power management unit 141 receives an input from the battery 142 and/or the charging management module 140, and supplies power to the processor 110, the internal memory 121, an external memory, the display 194, the camera 193, the wireless communications module 160, and the like. The power management unit 141 may be further configured to monitor parameters such as a battery capacity, a battery cycle count, and a battery health status (electric leakage or impedance). In some other embodiments, the power management unit 141 may alternatively be disposed in the processor 110. In some other embodiments, the power management unit 141 and the charging management module 140 may alternatively be disposed in a same device.

A wireless communications function of the mobile phone may be implemented by using the antenna 1, the antenna 2, the mobile communications module 150, the wireless communications module 160, the modem processor, the baseband processor, and the like.

The antenna 1 and the antenna 2 each are configured to transmit and receive an electromagnetic wave signal. Each antenna in the mobile phone may be configured to cover one or more communications frequency bands. Different antennas may be further multiplexed, to increase antenna utilization. For example, the antenna 1 may be multiplexed as a diversity antenna of a wireless local area network. In some other embodiments, an antenna may be used in combination with a tuning switch.

The mobile communications module 150 may provide a wireless communications solution that includes 2G/3G/4G/5G or the like and that is applied to the mobile phone. The mobile communications module 150 may include at least one filter, a switch, a power amplifier, a low noise amplifier (low noise amplifier, LNA), and the like. The mobile communications module 150 may receive an electromagnetic wave by using the antenna 1, perform processing such as filtering and amplification on the received electromagnetic wave, and transmit a processed electromagnetic wave to the modem processor for demodulation. The mobile communications module 150 may further amplify a signal modulated by the modem processor, and convert the signal into an electromagnetic wave for radiation by using the antenna 1. In some embodiments, at least some function modules of the mobile communications module 150 may be disposed in the processor 110. In some embodiments, at least some function modules of the mobile communications module 150 and at least some modules of the processor 110 may be disposed in a same device.

The wireless communications module 160 may provide wireless communications solutions that are applied to the mobile phone, for example, wireless local area network (wireless local area network, WLAN) (such as a wireless fidelity (wireless fidelity, Wi-Fi) network), Bluetooth (bluetooth, BT), global navigation satellite system (global navigation satellite system, GNSS), frequency modulation (frequency modulation, FM), near field communication (near field communication, NFC), and infrared (infrared, IR) technologies. The wireless communications module 160 may be one or more components integrating at least one communications processor module. The wireless communications module 160 receives an electromagnetic wave by using the antenna 2, performs frequency modulation and filtering on an electromagnetic wave signal, and sends a processed signal to the processor 110. The wireless communications module 160 may further receive a to-be-sent signal from the processor 110, perform frequency modulation and amplification on the signal, convert the signal into an electromagnetic wave by using the antenna 2, and radiate the electromagnetic wave by using the antenna 2.

In some embodiments, the antenna 1 of the mobile phone is coupled to the mobile communications module 150, and the antenna 2 is coupled to the wireless communications module 160, so that the mobile phone can communicate with a network and another device by using a wireless communications technology. The wireless communications technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a Beidou navigation satellite system (beidou navigation satellite system, BDS), a quasi-zenith satellite system (quasi-zenith satellite system, QZSS), and/or satellite based augmentation systems (satellite based augmentation systems, SBAS).

The mobile phone implements a display function by using the GPU, the display screen 194, the application processor, and the like. The GPU is a microprocessor for image processing, and is connected to the display 194 and the application processor. The GPU is configured to perform mathematical and geometric calculation, and render an image. The processor 110 may include one or more GPUs that execute program instructions to generate or change display information.

The display 194 is configured to display an image, a video, or the like. The display 194 includes a display panel. The display panel may use a liquid crystal display (liquid crystal display, LCD), an organic light-emitting diode (organic light-emitting diode, OLED), an active-matrix organic light-emitting diode or an active-matrix organic light-emitting diode (active-matrix organic light emitting diode, AMOLED), a flex light-emitting diode (flex light-emitting diode, FLED), a Miniled, a MicroLed, a Micro-oLed, a quantum dot light-emitting diodes (quantum dot light emitting diodes, QLED), or the like. In some embodiments, the mobile phone may include one or N displays 194, where N is a positive integer greater than 1.

The mobile phone may implement a photographing function by using the ISP, the camera 193, the video codec, the GPU, the display screen 194, the application processor, and the like.

The ISP is configured to process data fed back by the camera 193. For example, during photographing, a shutter is pressed, light is transmitted to a photosensitive element of the camera through a lens, an optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) photoelectric transistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into a standard image signal in an RGB format, a YUV format, or the like. In some embodiments, the mobile phone may include one or N cameras 193, where N is a positive integer greater than 1.

The digital signal processor is configured to process a digital signal, and may process another digital signal in addition to the digital image signal. For example, when the mobile phone selects a frequency, the digital signal processor is configured to perform Fourier transform and the like on frequency energy.

The video codec is configured to compress or decompress a digital video. The mobile phone may support one or more types of video codecs. In this way, the mobile phone can play or record videos in a plurality of encoding formats, for example, moving picture experts group (moving picture experts group, MPEG)-1, MPEG-2, MPEG-3, and MPEG-4.

The external memory interface 120 may be configured to connect to an external storage card, for example, a micro SD card, to extend a storage capability of the mobile phone. The external storage card communicates with the processor 110 through the external memory interface 120, to implement a data storage function. For example, files such as music and a video are stored in the external storage card.

The internal memory 121 may be configured to store computer-executable program code. The executable program code includes instructions. The processor 110 runs the instructions stored in the internal memory 121, to perform various function applications of the mobile phone and process data. The internal memory 121 may include a program storage area and a data storage area. The program storage area may store an operating system, an application required by at least one function (for example, a sound playing function or an image playing function), and the like. The data storage area may store data (for example, audio data or an address book) created during use of the mobile phone, and the like. In addition, the internal memory 121 may include a high-speed random access memory, and may further include a nonvolatile memory, for example, at least one magnetic disk storage device, a flash memory device, or a universal flash storage (universal flash storage, UFS).

The mobile phone may implement audio functions by using the audio module 170, the speaker 170A, the receiver 170B, the microphone 170C, the headset jack 170D, the application processor, and the like, for example, implement a music playback function and a recording function.

The audio module 170 is configured to convert digital audio information into an analog audio signal for output, and is also configured to convert an analog audio input into a digital audio signal. The audio module 170 may further be configured to code and decode an audio signal. In some embodiments, the audio module 170 may be disposed in the processor 110, or some function modules of the audio module 170 are disposed in the processor 110.

The speaker 170A, also referred to as a "horn", is configured to convert an audio electrical signal into a sound signal. The mobile phone may listen to music or answer a hands-free call by using the speaker 170A.

The receiver 170B, also referred to as an "earpiece", is configured to convert an audio electrical signal into a sound signal. When a call is answered or voice information is received by using the mobile phone, the receiver 170B may be put close to a human ear to receive a voice.

The microphone 170C, also referred to as a "mike" or a "microphone", is configured to convert a sound signal into an electrical signal. When making a call or sending voice information, a user may make a sound near the microphone 170C through the mouth of the user, to input a sound signal to the microphone 170C. At least one microphone 170C may be disposed in the mobile phone. In some other embodiments, two microphones 170C may be disposed in the mobile phone, to collect a sound signal and further implement a noise reduction function. In some other embodiments, three, four, or more microphones 170C may alternatively be disposed in the mobile phone, to collect a sound signal and reduce noise. The microphones may further identify a sound source, to implement a directional recording function, and the like.

The headset jack 170D is configured to connect to a wired headset. The headset jack 170D may be the USB port 130, or may be a 3.5 mm open mobile terminal platform (open mobile terminal platform, OMTP) standard interface, or a cellular telecommunications industry association of the USA (cellular telecommunications industry association of the USA, CTIA) standard interface.

The sensor module 180 may include a pressure sensor, a gyro sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like.

Certainly, the mobile phone may further include one or more components such as a button, a motor, an indicator, and a SIM card interface. This is not limited in this embodiment of this application.

The following describes a device networking method provided in the embodiments of this application in detail with reference to the accompanying drawings.

For example, electronic devices in a user's home form the communications system 100. The electronic devices in the user's home may be networked by using a Wi-Fi network in the user's home. For example, after joining the Wi-Fi network in the home, an electronic device 1 may send device information of the electronic device 1 to another electronic device in the Wi-Fi network in a domain name system (DNS) multicast manner. In addition, after receiving the device information sent by the newly added electronic device 1, another electronic device in the Wi-Fi network may also reply to the electronic device 1 with device information of the another electronic device. In this way, when joining the Wi-Fi network, the electronic device 1 may obtain device information of each electronic device that has joined the Wi-Fi network, to form a device information list shown in Table 2. The device information list records the device information of each electronic device in the Wi-Fi network, and is used to indicate a latest device status of each electronic device.

**Table 2**

| Device name | Device type | Electric quantity information | Wakeup duration (latest 24 hours) | Wakeup frequency (latest 24 hours) | ... |
|---|---|---|---|---|---|
| Electronic device 2 | First type | 100% | 9 hours | 5 times | ... |
| Electronic device 3 | Second type | 72% | 3 hours and 10 minutes | 23 times | ... |
| ... | ... | ... | ... | ... | ... |

As shown in Table 2, the device information list obtained by the newly added electronic device 1 includes the device information of each electronic device in the Wi-Fi network. The device information may specifically include a device name, a device type, electric quantity information, wakeup duration, wakeup frequency, and the like of each device. Certainly, the device information may further include parameters that can reflect a device status, such as a network access time point of the device, a current wakeup state of the device, a device model, an IP address, a MAC address, a service (for example, voice, video, or photographing) provided by the device, and a customized service parameter (for example, a latest wakeup duration).

Similar to the device information list shown in Table 2, one device information list is maintained in each electronic device in the foregoing Wi-Fi network. Therefore, each electronic device may determine a current master device in the Wi-Fi network based on a device information list stored in the electronic device, to establish a communications connection to the master device for networking.

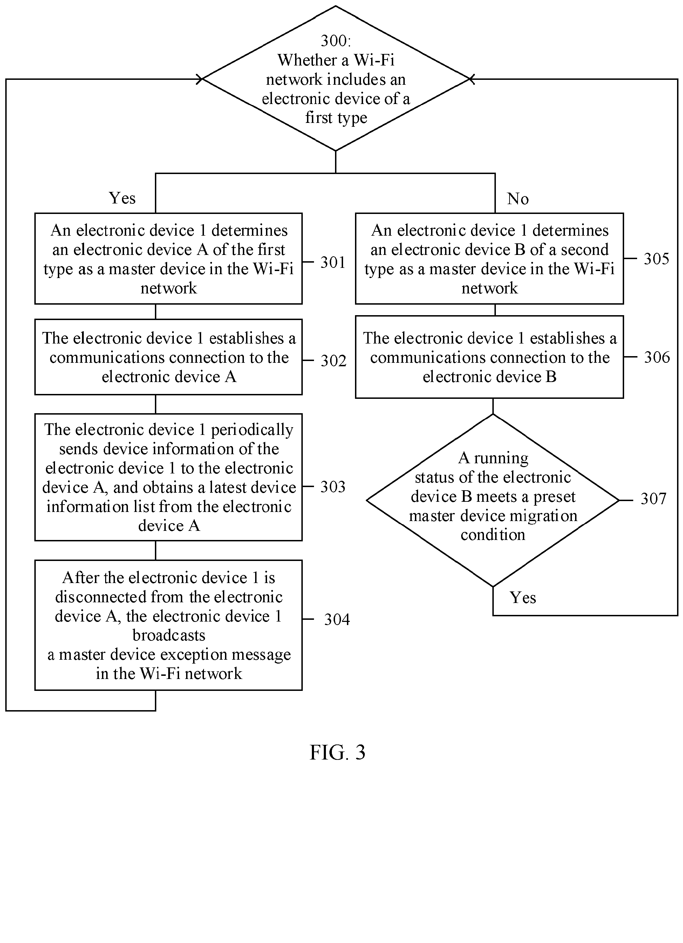

The electronic device 1 is still used as an example. As shown in FIG. 3, a method for determining, by the electronic device 1 based on the device information list, a master device in the Wi-Fi network for networking may include step 300 to step 307.

Step 300: The electronic device 1 determines whether the Wi-Fi network includes an electronic device of a first type.

Step 301: When the Wi-Fi network includes an electronic device of the first type, the electronic device 1 determines an electronic device A of the first type as the master device in the Wi-Fi network.

Specifically, when determining the master device in the current Wi-Fi network, the electronic device 1 may first query whether an electronic device of the first type is recorded in the device information list stored in the electronic device 1. If an electronic device of the first type is recorded, it indicates that the electronic device of the first type is connected to the current Wi-Fi network. Because electronic devices of the first type are powered by an external power supply when working, a probability that an exception such as a power failure occurs is relatively low. Therefore, the electronic device 1 may determine one electronic device of the first type as the master device in the current Wi-Fi network.

For example, if the current Wi-Fi network includes only one electronic device of the first type, for example, the electronic device A (the electronic device A may also be the electronic device 1), the electronic device 1 may determine the only electronic device A of the first type as the master device in the current Wi-Fi network.

Alternatively, if the current Wi-Fi network includes a plurality of electronic devices of the first type (the plurality of electronic devices of the first type may also include the electronic device 1), the electronic device 1 may select, according to a preset master device decision algorithm, one of the plurality of electronic devices of the first type as the master device in the current Wi-Fi network.

For example, the device information list shown in Table 2 may record a network access time point at which each electronic device accesses the Wi-Fi network. In this case, the master device decision algorithm may indicate that an electronic device of the first type with an earliest network access time point is the master device. Therefore, the electronic device 1 may determine, based on the network access time point of each electronic device of the first type in the device information list, the electronic device A of the first type with an earliest network access time point as the master device in the current Wi-Fi network.

For another example, the master device decision algorithm may further be that an electronic device of a specific type is preferably selected as the master device. For example, a priority sequence between different devices of the first type (namely, electronic devices of the first type) may be preset. For example, a priority of a television is higher than a priority of a router, and the priority of the router is higher than a priority of a smart speaker. In this case, the electronic device 1 may determine a device of the first type (for example, the electronic device A) with a highest priority in the device information list as the master device in the current Wi-Fi network.

Certainly, the master device decision algorithm may alternatively be another decision algorithm such as a raft election algorithm. A person skilled in the art may set the master device decision algorithm of the device of the first type based on an actual application scenario or actual experience. This is not limited in this embodiment of this application.

Furthermore, in addition to the electronic device 1, all other electronic devices in the Wi-Fi network maintain corresponding device information lists. Therefore, when the Wi-Fi network includes an electronic device of the first type, all other electronic devices in the Wi-Fi network may determine, according to a same master device decision algorithm, the electronic device A of the first type as the master device in the current Wi-Fi network.

Alternatively, each electronic device in the Wi-Fi network may vote for a current master device in the Wi-Fi network according to different master device decision algorithms. For example, the electronic device 1 may determine, based on the device information list stored in the electronic device 1, the electronic device A of the first type as the master device according to a master device decision algorithm 1, and broadcast a decision result 1 to another device in the Wi-Fi network. Similarly, an electronic device 2 may determine, based on a device information list stored in the electronic device 2, an electronic device C of the first type as the master device according to a master device decision algorithm 2, and broadcast the decision result 2 to another device in the Wi-Fi network. In this way, each electronic device in the Wi-Fi network may determine, in a voting manner, an electronic device of the first type (for example, the electronic device A) with a largest quantity of votes in all decision results as the master device in the current Wi-Fi network.

In some embodiments, each electronic device of the first type in the Wi-Fi network may be set to participate in the foregoing voting and election process. That is, when the Wi-Fi network includes a plurality of electronic devices of the first type, the plurality of electronic devices of the first type may vote with each other for a master device in the current Wi-Fi network. In this case, the electronic device of the second type in the Wi-Fi network does not need to participate in the foregoing voting and election process. Therefore, power consumption overheads of the electronic device of the second type can be reduced.

It can be learned that during device networking, when a plurality of devices to be networked include an electronic device of the first type, the electronic device of the first type may be preferably selected as the master device in the network. In one aspect, when the electronic device of the first type is used as the master device, a probability that an exception such as a power failure occurs is relatively low. This can ensure stability of the entire network after networking. In another aspect, when the electronic device of the first type is used as the master device, power consumption overheads of the electronic device of the second type in the network can be reduced, thereby prolonging duration of the entire network after networking.

Certainly, if the current Wi-Fi network does not include an electronic device of the first type, the electronic device 1 and another electronic device in the Wi-Fi network may determine, in electronic devices of the second type, the master device in the current Wi-Fi network according to the method in step 305.

Step 302: The electronic device 1 establishes a communications connection to the electronic device A.

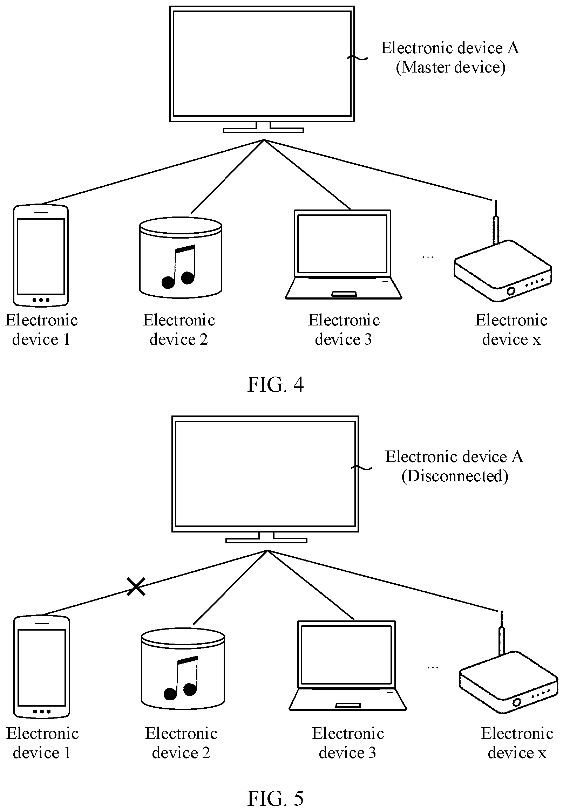

After the electronic device 1 determines the electronic device A of the first type as the master device in the Wi-Fi network, as shown in FIG. 4, the electronic device 1 may be used as a slave device to establish a communications connection to the master device (namely, the electronic device A). For example, the communications connection may be a network connection at an L3 layer.

The network connection at the L3 layer may be specifically a TCP (transmission control protocol, transmission control protocol) connection or a UDP (user datagram protocol, user datagram protocol)-based network connection, for example, a UDP-based CoAP (constrained application protocol, constrained application protocol) connection. This is not limited in this embodiment of this application.

In addition to the electronic device 1, as shown in FIG. 4, another electronic device in the Wi-Fi network may alternatively determine the electronic device A as the master device in the Wi-Fi network according to the method in step 301, and establish a communications connection to the electronic device A. In this way, the electronic device A in the Wi-Fi network is used as the master device to form a network of a star topology structure with other electronic devices.

In some embodiments, when performing step 301, the electronic device A in the Wi-Fi network may alternatively determine the electronic device A as the master device in the current Wi-Fi network. In this case, after determining the electronic device A as the master device, the electronic device A may also broadcast a master device update message to another electronic device in the Wi-Fi network, where the message may carry an identifier of the electronic device A. After receiving the message, the another electronic device may perform step 302 to establish a communications connection to the electronic device A, to complete a networking process of the star topology structure.

Step 303: The electronic device 1 periodically sends device information of the electronic device 1 to the electronic device A, and obtains a latest device information list from the electronic device A.

After each slave device such as the electronic device 1 establishes a communications connection to the electronic device A (namely, the master device) to complete the networking of the star topology structure, the electronic device A may be used as a central node to receive device information periodically sent by each slave device in the Wi-Fi network. Therefore, device information of a corresponding device in the device information list is updated, so that each piece of device information in the device information list stored in the electronic device A is in a latest state. In addition, each slave device in the Wi-Fi network may further obtain a latest device information list from the electronic device A, so that each device in the Wi-Fi network can learn of a latest device status of another device.

For example, when the electronic device 1 is an electronic device of the first type, the electronic device 1 may start a preset timer T1. When the timer T1 expires, the electronic device 1 may be used as a slave device to send latest device information of the electronic device 1 to a current master device (namely, the electronic device A). After receiving the device information sent by the electronic device 1, the electronic device A may update the corresponding device information of the electronic device 1 in the device information list of the electronic device A, so that the device information list stored in the electronic device A is in a latest state.

In addition, after receiving the device information sent by the electronic device 1, the electronic device A may further send a latest device information list to the electronic device 1, so that the electronic device 1 may learn of a latest device status of another electronic device in the Wi-Fi network by using the device information list.

Correspondingly, when the electronic device 1 is an electronic device of the second type, the electronic device 1 may start a preset timer T2. When the timer T2 expires, the electronic device 1 may be used as a slave device to send latest device information of the electronic device 1 to a current master device (namely, the electronic device A). Similarly, the electronic device A may update the corresponding device information of the electronic device 1 in the device information list of the electronic device A. In addition, the electronic device A may send a latest device information list to the electronic device 1, so that the device information list stored in the electronic device 1 and the device information list stored in the electronic device A are synchronized with each other and are in a latest state.

A difference is that when the electronic device 1 is the electronic device of the second type, and when the electronic device 1 interacts with the electronic device A in a sleep state, the electronic device 1 needs to consume additional power consumption to wake up a processor of the electronic device 1, resulting in an increase in power consumption of the electronic device 1. Therefore, an interval in which the electronic device 1 starts the timer T2 may be set to be synchronized with a device wakeup interval of the electronic device 1. In other words, when the electronic device 1 is in a wakeup state, the electronic device 1 may be triggered to send latest device information of the electronic device 1 to the electronic device A, and obtains a latest device information list from the electronic device A.

For example, an electronic device of the second type (for example, a mobile phone or a tablet computer) periodically sends a heartbeat packet to a PUSH message server. In this case, timing duration of the timer T2 may be set to be synchronized with an interval in which the electronic device 1 sends the heartbeat packet. In this way, each time the electronic device 1 is woken up and sends a heartbeat packet to the PUSH message server, the electronic device 1 may send latest device information of the electronic device 1 to the electronic device A, thereby reducing a quantity of wakeup durations for which the electronic device 1 is woken up from a sleep state to a wakeup state, and reducing power consumption of the electronic device 1.

That the electronic device is in a wakeup state may be that a processor in the electronic device is woken up to work. Correspondingly, that the electronic device is in a sleep state may be that the processor in the electronic device is in a sleep or low power consumption state. For example, a corresponding flag bit may be preset in the electronic device to indicate a working status of the processor. For example, when the flag bit is 01, it indicates that the processor of the electronic device is in a working status; or when the flag bit is 00, it indicates that the processor of the electronic device is in a sleep state. In this case, the electronic device may determine, by collecting statistics about duration of the flag bit, duration or frequency that the electronic device is in a wakeup state or a sleep state.

In addition to the electronic device 1, another slave device in the Wi-Fi network may also periodically send device information of the another slave device to the electronic device A (namely, the master device) according to the foregoing method, and obtain a latest device information list from the electronic device A. In this way, the device information list stored in each slave device in the entire Wi-Fi network and the device information list stored in the electronic device A (namely, the master device) are synchronized with each other and are in a latest state.

Step 304: After detecting that the electronic device 1 is disconnected from the electronic device A, the electronic device 1 broadcasts a master device exception message in the Wi-Fi network.

After the electronic device 1 uses the electronic device A as the master device and establishes a communications connection to the electronic device A, as shown in FIG. 5, if the electronic device 1 detects that the communications connection to the electronic device A is disconnected, for example, the communications connection between the electronic device 1 and the electronic device A times out, or if the electronic device 1 fails to send the device information to the electronic device A for N consecutive times, it indicates that an exception such as a disconnection, a fault, or a power failure may occur on the electronic device A in this case, and consequently, the communications connection between the electronic device 1 and the electronic device A is disconnected. In this case, to ensure that each electronic device in the Wi-Fi network can continue to run in networking, the electronic device 1 may broadcast the master device exception message to another electronic device in the Wi-Fi network, to notify the another electronic device that an exception occurs on the current master device (namely, the electronic device A). In this way, each electronic device in the Wi-Fi network is triggered to start to reselect a new master device for networking.

For example, when broadcasting the master device exception message, the electronic device 1 may further carry latest device information of the electronic device 1 in the master device exception message. The electronic device that receives the master device exception message may also broadcast latest device information of the electronic device in the Wi-Fi network. In this way, after an exception occurs on the master device (namely, the electronic device A), each electronic device in the Wi-Fi network may obtain latest device information of another device, to obtain a latest device information list. Subsequently, each electronic device in the Wi-Fi network may reselect, based on the latest device information list, a new master device for networking.

In step 304, an example in which the electronic device 1 detects that a connection to the electronic device A times out is used for description. It may be understood that after another slave device in the Wi-Fi network detects that a connection to the electronic device A times out, the another slave device may alternatively broadcast the master device exception message in the Wi-Fi network according to the method in step 304, so that each electronic device in the Wi-Fi network is triggered to start to reselect a new master device for networking.

The electronic device 1 is still used as an example. When starting to reselect a new master device for networking, the electronic device 1 may query whether a currently stored latest device information list records an electronic device of the first type, that is, whether the current Wi-Fi network includes an electronic device of the first type. If an electronic device of the first type is included, the electronic device 1 may continue to determine a new master device according to the method in step 301. Alternatively, if an electronic device of the first type is not included, the electronic device 1 may perform step 305 to determine a new master device.

In addition, if the electronic device A (namely, the master device) detects that a communications connection to a slave device is disconnected, it indicates that an exception such as a disconnection, a fault, or a power failure may occur on the slave device. In this case, the electronic device A may delete related device information of the slave device from the maintained device information list, so that the device information list stored in the electronic device A is in a latest state.

Step 305: When the Wi-Fi network does not include an electronic device of the first type, the electronic device 1 determines an electronic device B of the second type as the master device in the Wi-Fi network.

The electronic device 1 is still used as an example. If the electronic device 1 detects that a connection to the electronic device A is disconnected, or receives a master device exception message broadcast by another electronic device, it indicates that in this case, a new master device needs to be reselected in the Wi-Fi network for networking. Then, the electronic device 1 can query whether an electronic device of the first type is recorded in a stored latest device information list.

If the device information list does not record an electronic device of the first type, it indicates that the current Wi-Fi network does not include an electronic device of the first type. In this case, the electronic device 1 may determine, based on device information of electronic devices of the second type in the device information list, the electronic device B of the second type as the master device in the current Wi-Fi network.

For example, if the current Wi-Fi network includes only one electronic device of the second type, for example, an electronic device B (the electronic device B may also be the electronic device 1), the electronic device 1 may determine the only electronic device B of the second type as the master device in the current Wi-Fi network.

Alternatively, if the current Wi-Fi network includes a plurality of electronic devices of the second type (namely, devices of the second type), the electronic device 1 may select, based on parameters such as electric quantity information, a wakeup duration, or wakeup frequency of these devices of the second type in the device information list, a device of the second type as the master device in the current Wi-Fi network.

For example, the electronic device 1 may determine a device of the second type (for example, the electronic device B) with a highest electric quantity in the device information list as the master device in the current Wi-Fi network. That is, when the Wi-Fi network does not include an electronic device of the first type, a device of the second type with a relatively high electric quantity may be determined as the master device for networking. This reduces a case in which an exception occurs on the master device due to a relatively low electric quantity after networking. Therefore, stability of a network after networking and duration of the network are ensured.

For another example, the electronic device 1 may determine a device of the second type (for example, the electronic device B) with a longest wakeup duration in the device information list as the master device in the current Wi-Fi network. When the wakeup duration of the electronic device B is longer, the electronic device B needs to wake up a processor of the electronic device B for a smaller quantity of times to start to work when the electronic device B works as the master device. Therefore, when the Wi-Fi network does not include an electronic device of the first type, a device of the second type with a longer wakeup duration is selected as the master device for networking. This can reduce power consumption overheads during networking. Therefore, stability of a network after networking and duration of the network are ensured.

For another example, the electronic device 1 may determine a device of the second type (for example, the electronic device B) with highest wakeup frequency in the device information list as the master device in the current Wi-Fi network. Similarly, when the wakeup frequency of the electronic device B is higher, the electronic device B is used more frequently, and a time in which the processor in the electronic device B is in a working status is longer. In this case, when the electronic device B works as the master device, a quantity of times of waking up the electronic device B from a sleep state is smaller. Therefore, when the Wi-Fi network does not include an electronic device of the first type, a device of the second type with higher wakeup frequency is selected as the master device for networking. This can reduce power consumption overheads during networking. Therefore, stability of a network after networking and duration of the network are ensured.

Alternatively, the electronic device 1 may select an optimal device of the second type as the master device in the current Wi-Fi network with reference to wakeup durations and wakeup frequency of devices of the second type. For example, the electronic device 1 may select, from a plurality of devices of the second type whose wakeup durations are greater than a first preset value (for example, greater than 5 hours), a device of the second type with highest wakeup frequency as the master device in the current Wi-Fi network.

Alternatively, the device information list stored in the electronic device 1 may further include a current wakeup state of each device of the second type, that is, an electronic device of the second type currently is in a wakeup state or a sleep state. In this case, when determining a master device in a plurality of devices of the second type, the electronic device 1 may further select the master device with reference to current wakeup states of the devices of the second type. For example, if there are a plurality of devices of the second type whose wakeup durations are greater than a first preset value and whose wakeup frequency is greater than a second preset value, the electronic device 1 may preferably use, as the master device in the current Wi-Fi network, a device of the second type that currently is in a wakeup state. In this way, when the device of the second type in a wakeup state is switched to be the master device to work, a processor of the device of the second type does not need to be additionally woken up, to avoid an increase in device power consumption.

Alternatively, the electronic device 1 may select an optimal device of the second type as the master device in the current Wi-Fi network with reference to a plurality of parameters such as electric quantity information, wakeup durations, and wakeup frequency of devices of the second type. For example, if there are a plurality of devices of the second type whose wakeup durations are greater than a first preset value and whose wakeup frequency is greater than the second preset value, the electronic device 1 may select, from the plurality of devices of the second type, a device of the second type with a highest electric quantity as the master device in the current Wi-Fi network. In this way, not only power consumption overheads caused by waking up the device of the second type that is used as the master device can be reduced, but also a case in which an exception occurs on the master device due to a relatively low electric quantity after networking can be reduced. Therefore, stability of a network after networking and duration of the network are ensured.

In some other embodiments, the electronic device 1 may alternatively select a plurality of devices of the second type as the master device in the Wi-Fi network in turn to work. For example, if the electronic device 1 finds, in the device information list of the electronic device 1, that the current Wi-Fi network includes three devices of the second type, the electronic device 1 may determine that the three devices of the second type are used as the master device in the Wi-Fi network in turn in a specific working interval (for example, two hours) to work. For another example, the electronic device 1 may determine, based on electric quantity information and wakeup durations of the devices of the second type, two devices of the second type with relatively high electric quantities and relatively long wakeup durations, and then the electronic device 1 may determine that the two devices of the second type are used as the master device in the Wi-Fi network in turn in a specific working interval to work.

Furthermore, in addition to the electronic device 1, all other electronic devices in the Wi-Fi network store device information lists that are synchronized with the device information list of the electronic device 1. Therefore, when an exception occurs on an original master device (namely, the electronic device A) in the Wi-Fi network, another electronic device in the Wi-Fi network may re-determine a current master device in the Wi-Fi network according to the method in step 301 or step 305.

It can be learned that, when a plurality of electronic devices to be networked do not include an electronic device of the first type, an electronic device may preferably select an electronic device that is in an electronic device of the second type and that has relatively low power consumption overheads and relatively long network duration as the master device based on parameters such as wakeup duration and an electric quantity of each electronic device of the second type, thereby ensuring stability of an entire network after networking.

Step 306: The electronic device 1 establishes a communications connection to the electronic device B.

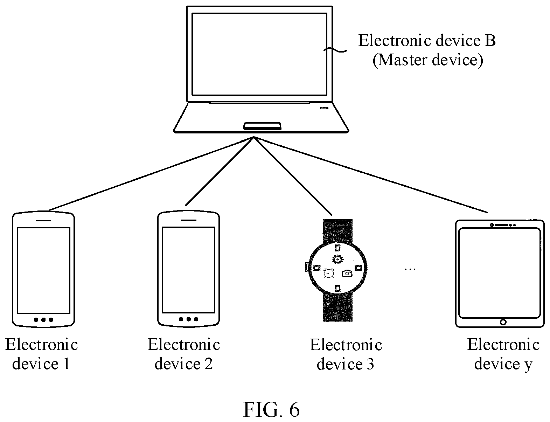

Similar to step 302, after the electronic device 1 determines the electronic device B of the second type as the master device in the Wi-Fi network, as shown in FIG. 6, the electronic device 1 may be used as a slave device to establish a communications connection to the master device (namely, the electronic device B), and disconnect a communications connection to an original master device (namely, the electronic device A).

In addition to the electronic device 1, another electronic device in the Wi-Fi network may alternatively determine the electronic device B as a new master device in the Wi-Fi network according to the method in step 305, and establish a communications connection to the new master device. In this way, still as shown in FIG. 6, the electronic device B in the Wi-Fi network is used as the new master device to re-establish a network of a star topology structure with other electronic devices. For a user, when an exception occurs on the original master device in the Wi-Fi network, another device in the Wi-Fi network may sense the exception and automatically determine a new master device to perform networking again. The user may still normally use the Wi-Fi network to complete a control function on a related electronic device. Therefore, user experience is improved.

After each slave device such as the electronic device 1 establishes a communications connection to the new master device (namely, the electronic device B) to complete the networking of the star topology structure, similar to the working process in which the electronic device A is used as the master device, the electronic device B may be used as a center node to receive device information periodically sent by each slave device in the Wi-Fi network. Therefore, device information of a corresponding device in the device information list is updated, so that each piece of device information in the device information list stored in the electronic device B is in a latest state. In addition, each slave device in the Wi-Fi network may further obtain a latest device information list from the electronic device B. In this way, the device information list stored in each device in the Wi-Fi network and the device information list stored in the electronic device B are synchronized with each other and are in a latest state.

Step 307: When a running status of the electronic device B meets a preset master device migration condition, the electronic device 1 re-performs step 301 or step 305.

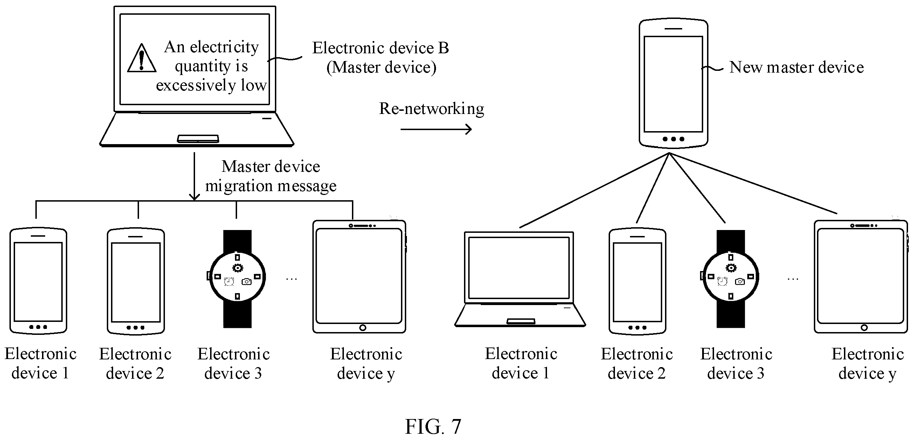

After the electronic device B of the second type starts to work as the master device, the electronic device B may detect in real time whether the running status of the electronic device B meets the preset master device migration condition. As shown in FIG. 7, when the preset master device migration condition is met, it indicates that the electronic device B is no longer suitable to continue to work as the master device in the Wi-Fi network in this case. Then, the electronic device B may broadcast a master device migration message to each slave device in the Wi-Fi network, to trigger a slave device (for example, the electronic device 1) that receives the master device migration message to reselect a new master device for networking by performing step 301 or step 305.

For example, the master device migration condition may include: An electric quantity of the master device is less than a preset electric quantity, or an electric quantity of the master device is less than an electric quantity of any slave device.

For example, after starting to work as the master device, the electronic device B may obtain electric quantity information of the electronic device B in real time. When an electric quantity of the electronic device B is less than a preset electric quantity (for example, 50%), and in this case, if the electronic device B continues to work as the master device, it is easy to occur a case that affects network stability, for example, the electric quantity is exhausted. Therefore, the electronic device B may broadcast a master device migration message to each slave device in the Wi-Fi network, to trigger the slave device to reselect a new master device for networking.

For another example, after starting to work as the master device, the electronic device B may obtain electric quantity information of the electronic device B in real time, and compare the electric quantity information of the electronic device B with electric quantity information of another electronic device in the device information list. When an electric quantity of the electronic device B is less than an electric quantity of each slave device in the Wi-Fi network, or when an electric quantity of the electronic device B is less than electric quantities of most slave devices (for example, 80% of slave devices), and similarly, if the electronic device B continues to work as the master device, it is easy to occur a case that affects network stability, for example, the electric quantity is exhausted. Therefore, the electronic device B may broadcast a master device migration message to each slave device in the Wi-Fi network, to trigger the slave device to reselect a new master device for networking.

For example, the master device migration condition may include: Wakeup duration of the master device is less than preset wakeup duration, or wakeup frequency of the master device is less than preset wakeup frequency.

For example, after starting to work as the master device, the electronic device B may collect, based on working duration of a processor, statistics about wakeup duration in which the electronic device B is in a wakeup state. When it is detected that the wakeup duration of the electronic device B is less than the preset wakeup duration, it indicates that a time for waking up the processor in the electronic device B is relatively short. As a result, the electronic device B needs to additionally wake up the processor when working as the master device, to increase power consumption of the electronic device B. Therefore, the electronic device B may broadcast a master device migration message to each slave device in the Wi-Fi network, to trigger the slave device to reselect a new master device for networking. Alternatively, the electronic device B may collect, based on sleep duration of the processor, statistics about sleep duration in which the electronic device B is in a sleep state. If the sleep duration of the electronic device B is greater than preset sleep duration, it indicates that the electronic device B has entered a sleep state. If the electronic device B continues to work as the master device, the processor needs to be additionally woke up, to increase power consumption of the electronic device B. Therefore, the electronic device B may broadcast a master device migration message to each slave device in the Wi-Fi network, to trigger the slave device to reselect a new master device for networking.

For another example, after starting to work as the master device, the electronic device B may further collect, based on working frequency of the processor, statistics about wakeup frequency of the electronic device B. If the wakeup frequency of the electronic device B is less than preset wakeup frequency, it indicates that a quantity of times for which the processor in the electronic device B is woken up is relatively small. If the electronic device B continues to work as the master device, the processor needs to be additionally woke up, to increase power consumption of the electronic device B. Therefore, the electronic device B may broadcast a master device migration message to each slave device in the Wi-Fi network, to trigger the slave device to reselect a new master device for networking.

It may be understood that the master device migration condition may further include another condition affecting the electronic device B to continue to work as the master device. This is not limited in this embodiment of this application. For example, the master device migration condition may alternatively be that working duration of the master device is greater than preset duration. In this case, if it is detected that the working duration in which the electronic device B works as the master device is greater than the preset duration, to avoid that a work task of the master device brings excessively high load to the electronic device B, the electronic device B may broadcast a master device migration message to each slave device in the Wi-Fi network, to trigger the slave device to reselect a new master device for networking.

In addition, when a new electronic device is connected to the Wi-Fi network, each electronic device in the Wi-Fi network may also be triggered to reselect a new master device for networking by performing step 301 or step 305. This is not limited in this embodiment of this application.

It can be learned that in the device networking method provided in this embodiment of this application, whether the master device is suitable to continue to work as the master device may be determined based on a current running status of the master device. If the electronic device currently used as the master device is no longer suitable to continue to work as the master device, the electronic device in the Wi-Fi network may be triggered to reselect an optimal electronic device in the Wi-Fi network as a new master device for networking and running, to dynamically adjust the master device in the network. In this way, network stability and network duration are optimized.

It should be noted that in the foregoing embodiment, an example in which the electronic device performs device networking in the Wi-Fi network is used for description. It may be understood that the electronic device may further construct a network of a start topology structure by using the foregoing networking method in communications networks, such as Bluetooth, near field communication (near field communication, NFC), a voice over Internet protocol (voice over Internet protocol, VoIP), Ethernet, a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), and long term evolution (long term evolution, LTE). This is not limited in this embodiment of this application.

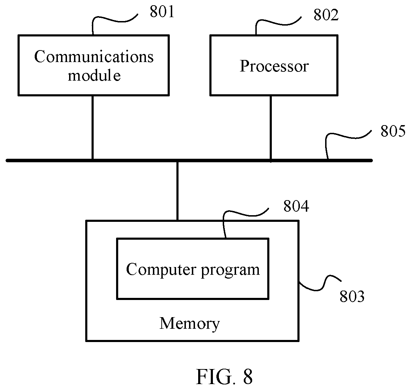

As shown in FIG. 8, an embodiment of this application discloses an electronic device, including a communications module 801, one or more processors 802, one or more memories 803, one or more application programs (not shown), and one or more computer programs 804. The foregoing components may be connected by using one or more communications buses 805. The one or more computer programs 804 are stored in the memory 803 and are executed, through configuration, by the one or more processors 802. The one or more computer programs 804 include instructions, and the instructions may be used to perform step 300 to step 307 shown in FIG. 3 in the foregoing embodiment.

For example, the processor 802 may be specifically the processor 110 shown in FIG. 2, the memory 803 may be specifically the internal memory 121 shown in FIG. 2, and the communications module 801 may be specifically the mobile communications module 150 or the wireless communications module 160 shown in FIG. 2. Certainly, the electronic device may further include components such as a display and a touch sensor. This is not limited in this embodiment of this application.

The foregoing descriptions about implementations allow a person skilled in the art to understand that, for the purpose of convenient and brief description, division of the foregoing function modules is taken as an example for illustration. During actual application, the foregoing functions can be allocated to different modules and implemented according to a requirement, that is, an inner structure of an apparatus is divided into different function modules to implement all or some of the functions described above. For a detailed working process of the foregoing system, apparatus, and unit, refer to a corresponding process in the foregoing method embodiments, and details are not described herein again.

Function units in the embodiments of this application may be integrated into one processing unit, or each of the units may exist alone physically, or two or more units are integrated into one unit. The integrated unit may be implemented in a form of hardware, or may be implemented in a form of a software function unit.

When the integrated unit is implemented in the form of a software functional unit and sold or used as an independent product, the integrated unit may be stored in a computer-readable storage medium. Based on such an understanding, the technical solutions of the embodiments of this application essentially, or the part contributing to the conventional technology, or all or some of the technical solutions may be implemented in the form of a software product. The computer software product is stored in a storage medium and includes several instructions for instructing a computer device (which may be a personal computer, a server, or a network device) to perform all or some of the steps of the methods described in the embodiments of this application. The foregoing storage medium includes: any medium that can store program code, such as a flash memory, a removable hard disk, a read-only memory, a random access memory, a magnetic disk, or an optical disc.

The foregoing descriptions are merely specific implementations of the embodiments of this application, but are not intended to limit the protection scope of the embodiments of this application which shall be subject to the protection scope of the claims.

## Claims

1. A device networking method, comprising:
determining (301), by a first device, a second device as a master device in a communications system, wherein the second device is a device of a first type, the first device is a device of a second type, the device of the first type is a device that is powered by an external power supply, and the device of the second type is a device that is powered by a battery;
establishing (302), by the first device as a slave device, a communications connection to the second device;
determining (305), by the first device, a third device as a new master device in the communications system when an exception occurs on the second device, wherein the third device is a device of the second type; and
establishing (306), by the first device as the slave device, a communications connection to the third device.

2. The method according to claim 1, wherein the determining, by a first device, a second device as a master device in a communications system comprises:
querying, by the first device, whether the communications system comprises a device of the first type; and
if the communications system comprises a device of the first type, determining, by the first device, the second device as the master device in devices of the first type.

3. The method according to claim 2, wherein the first device stores a device information list, the device information list records device information of devices in the communications system, and the device information comprises device types; and
the querying, by the first device, whether the communications system comprises a device of the first type comprises:
querying, by the first device based on the device types of the devices in the device information list, whether the communications system comprises a device of the first type.

4. The method according to claim 2, wherein the determining, by the first device, the second device as the master device in devices of the first type comprises:
if the devices of the first type comprise only the second device, determining, by the first device, the second device as the master device; or
if the devices of the first type comprise a plurality of devices, selecting, by the first device according to a preset master device decision algorithm, the second device from the plurality of devices as the master device.

5. The method according to any one of claims 1 to 4, wherein the determining, by the first device, a third device as a new master device in the communications system when an exception occurs on the second device comprises:
when an exception occurs on the second device, querying, by the first device, whether the communications system comprises a device of the first type; and
if the communications system does not comprise a device of the first type, determining, by the first device, the third device as the new master device in devices of the second type.

6. The method according to claim 5, wherein the determining, by the first device, the third device as the new master device in devices of the second type comprises:
determining, by the first device, the third device as the new master device based on device information of devices of the second type in the device information list.

7. The method according to claim 5 or 6, wherein
the third device is a device, in the devices of the second type, whose electric quantity is greater than an electric quantity threshold; and/or the third device is a device, in the devices of the second type, whose wakeup duration is greater than a time threshold; and/or the third device is a device, in the devices of the second type, whose wakeup frequency is greater than a frequency threshold.

8. The method according to any one of claims 1 to 7, wherein after the establishing, by the first device as a slave device, a communications connection to the second device, the method further comprises:
periodically sending (303), by the first device, device information of the first device to the second device, and obtaining, from the second device, a latest device information list in the communications system.

9. The method according to claim 8, wherein an interval in which the first device sends the device information to the second device is the same as a heartbeat interval of the first device.

10. The method according to any one of claims 1 to 9, wherein after the establishing, by the first device as a slave device, a communications connection to the second device, the method further comprises:
if the first device receives a master device exception message sent by another slave device in the communications system, determining, by the first device, that an exception occurs on the second device; or
if the first device detects that the communications connection to the second device is disconnected, determining, by the first device, that an exception occurs on the second device.

11. The method according to any one of claims 1 to 10, wherein after the establishing, by the first device as the slave device, a communications connection to the third device, the method further comprises:
if the first device receives a master device migration message sent by the third device, re-determining, by the first device, a new master device in the communications system.

12. The method according to any one of claims 1 to 11, wherein after the establishing, by the first device as a slave device, a communications connection to the second device, the method further comprises:
when an exception occurs on the second device, determining, by the first device, the first device as a new master device in the communications system; and
establishing, by the first device as the master device, a communications connection to another device in the communications system, to form a network of a star topology structure.

13. The method according to claim 12, wherein after the determining, by the first device, the first device as a new master device in the communications system, the method further comprises:
detecting (307), by the first device, whether a running status of the first device meets a preset master device migration condition; and
if the preset master device migration condition is met, sending, by the first device, a master device migration message to another device in the communications system.

14. The method according to claim 13, wherein the master device migration condition comprises: an electric quantity of the master device is less than an electric quantity threshold; and/or a wakeup duration of the master device is less than a time threshold; and/or wakeup frequency of the master device is less than a frequency threshold.

15. An electronic device, comprising:
one or more processors;
a memory; and
a communications module, wherein
the memory stores one or more computer programs, the one or more computer programs comprise instructions, and when the instructions are executed by the electronic device, the electronic device is enabled to perform the device networking method according to any one of claims 1 to 14.

16. A communications system, wherein the communications system comprises one or more devices of a first type and one or more devices of a second type, a device of the first type is a device powered by an external power supply, and a device of the second type is a device powered by a battery; and
when a first device is the electronic device according to claim 15.

17. A computer-readable storage medium, wherein the computer-readable storage medium stores instructions, and when the instructions are run on an electronic device, the electronic device is enabled to perform the device networking method according to any one of claims 1 to 14.

18. A computer program product comprising instructions, wherein when the computer program product is run on an electronic device, the electronic device is enabled to perform the device networking method according to any one of claims 1 to 14.

## Patentansprüche

1. Vorrichtungsvernetzungsverfahren, umfassend:
Bestimmen (301), durch eine erste Vorrichtung, einer zweiten Vorrichtung als eine Master-Vorrichtung in einem Kommunikationssystem, wobei die zweite Vorrichtung eine Vorrichtung einer ersten Art ist, die erste Vorrichtung eine Vorrichtung einer zweiten Art ist, die Vorrichtung der ersten Art eine Vorrichtung ist, die durch eine externe Leistungsversorgung versorgt wird, und die Vorrichtung der zweiten Art eine Vorrichtung ist, die durch eine Batterie versorgt wird;
Herstellen (302), durch die erste Vorrichtung als eine Slave-Vorrichtung, einer Kommunikationsverbindung mit der zweiten Vorrichtung;
Bestimmen (305), durch die erste Vorrichtung, einer dritten Vorrichtung als eine neue Master-Vorrichtung in dem Kommunikationssystem, wenn eine Ausnahme auf der zweiten Vorrichtung auftritt, wobei die dritte Vorrichtung eine Vorrichtung der zweiten Art ist; und
Herstellen (306), durch die erste Vorrichtung als die Slave-Vorrichtung, einer Kommunikationsverbindung mit der dritten Vorrichtung.

2. Verfahren nach Anspruch 1, wobei das Bestimmen, durch eine erste Vorrichtung, einer zweiten Vorrichtung als eine Master-Vorrichtung in einem Kommunikationssystem Folgendes umfasst:
Abfragen, durch die erste Vorrichtung, ob das Kommunikationssystem eine Vorrichtung der ersten Art umfasst; und
wenn das Kommunikationssystem eine Vorrichtung der ersten Art umfasst, Bestimmen, durch die erste Vorrichtung, der zweiten Vorrichtung als die Master-Vorrichtung in Vorrichtungen der ersten Art.

3. Verfahren nach Anspruch 2, wobei die erste Vorrichtung eine Vorrichtungsinformationsliste speichert, die Vorrichtungsinformationsliste Vorrichtungsinformationen von Vorrichtungen in dem Kommunikationssystem aufzeichnet und die Vorrichtungsinformationen Vorrichtungsarten umfassen; und
das Abfragen, durch die erste Vorrichtung, ob das Kommunikationssystem eine Vorrichtung der ersten Art umfasst, Folgendes umfasst:
Abfragen, durch die erste Vorrichtung basierend auf den Vorrichtungsarten der Vorrichtungen in der Vorrichtungsinformationsliste, ob das Kommunikationssystem eine Vorrichtung der ersten Art umfasst.

4. Verfahren nach Anspruch 2, wobei das Bestimmen, durch die erste Vorrichtung, der zweiten Vorrichtung als die Master-Vorrichtung in Vorrichtungen der ersten Art Folgendes umfasst:
wenn die Vorrichtungen der ersten Art nur die zweite Vorrichtung umfassen, Bestimmen, durch die erste Vorrichtung, der zweiten Vorrichtung als die Master-Vorrichtung; oder
wenn die Vorrichtungen der ersten Art eine Vielzahl von Vorrichtungen umfassen, Auswählen, durch die erste Vorrichtung gemäß einem voreingestellten Master-Vorrichtungsentscheidungsalgorithmus, der zweiten Vorrichtung aus der Vielzahl von Vorrichtungen als die Master-Vorrichtung.

5. Verfahren nach einem der Ansprüche 1 bis 4, wobei das Bestimmen, durch die erste Vorrichtung, einer dritten Vorrichtung als eine neue Master-Vorrichtung in dem Kommunikationssystem, wenn eine Ausnahme auf der zweiten Vorrichtung auftritt, Folgendes umfasst:
wenn eine Ausnahme auf der zweiten Vorrichtung auftritt, Abfragen, durch die erste Vorrichtung, ob das Kommunikationssystem eine Vorrichtung der ersten Art umfasst; und
wenn das Kommunikationssystem keine Vorrichtung der ersten Art umfasst, Bestimmen, durch die erste Vorrichtung, der dritten Vorrichtung als die neue Master-Vorrichtung in Vorrichtungen der zweiten Art.

6. Verfahren nach Anspruch 5, wobei das Bestimmen, durch die erste Vorrichtung, der dritten Vorrichtung als die neue Master-Vorrichtung in Vorrichtungen der zweiten Art Folgendes umfasst: Bestimmen, durch die erste Vorrichtung, der dritten Vorrichtung als die neue Master-Vorrichtung basierend auf Vorrichtungsinformationen von Vorrichtungen der zweiten Art in der Vorrichtungsinformationsliste.

7. Verfahren nach Anspruch 5 oder 6, wobei
die dritte Vorrichtung eine Vorrichtung in den Vorrichtungen der zweiten Art ist, deren elektrische Quantität größer als ein elektrischer Quantitätsschwellenwert ist; und/oder die dritte Vorrichtung eine Vorrichtung in den Vorrichtungen der zweiten Art ist, deren Aufwachdauer größer als ein Zeitschwellenwert ist; und/oder die dritte Vorrichtung eine Vorrichtung in den Vorrichtungen der zweiten Art ist, deren Aufwachfrequenz größer als ein Frequenzschwellenwert ist.

8. Verfahren nach einem der Ansprüche 1 bis 7, wobei das Verfahren nach dem Herstellen, durch die erste Vorrichtung als eine Slave-Vorrichtung, einer Kommunikationsverbindung mit der zweiten Vorrichtung ferner Folgendes umfasst:
periodisches Senden (303), durch die erste Vorrichtung, von Vorrichtungsinformationen der ersten Vorrichtung an die zweite Vorrichtung und Erlangen, von der zweiten Vorrichtung, einer neuesten Vorrichtungsinformationsliste in dem Kommunikationssystem.

9. Verfahren nach Anspruch 8, wobei ein Intervall, in dem die erste Vorrichtung die Vorrichtungsinformationen an die zweite Vorrichtung sendet, gleich einem Heartbeat-Intervall der ersten Vorrichtung ist.

10. Verfahren nach einem der Ansprüche 1 bis 9, wobei das Verfahren nach dem Herstellen, durch die erste Vorrichtung als eine Slave-Vorrichtung, einer Kommunikationsverbindung mit der zweiten Vorrichtung ferner Folgendes umfasst:
wenn die erste Vorrichtung eine Master-Vorrichtungsausnahmenachricht empfängt, die durch eine andere Slave-Vorrichtung in dem Kommunikationssystem gesendet wird, Bestimmen, durch die erste Vorrichtung, dass eine Ausnahme auf der zweiten Vorrichtung auftritt; oder
wenn die erste Vorrichtung detektiert, dass die Kommunikationsverbindung zu der zweiten Vorrichtung getrennt ist, Bestimmen, durch die erste Vorrichtung, dass eine Ausnahme auf der zweiten Vorrichtung auftritt.

11. Verfahren nach einem der Ansprüche 1 bis 10, wobei das Verfahren nach dem Herstellen, durch die erste Vorrichtung als die Slave-Vorrichtung, einer Kommunikationsverbindung mit der dritten Vorrichtung ferner Folgendes umfasst:
wenn die erste Vorrichtung eine Master-Vorrichtungsmigrationsnachricht empfängt, die durch die dritte Vorrichtung gesendet wird, erneutes Bestimmen, durch die erste Vorrichtung, einer neuen Master-Vorrichtung in dem Kommunikationssystem.

12. Verfahren nach einem der Ansprüche 1 bis 11, wobei das Verfahren nach dem Herstellen, durch die erste Vorrichtung als eine Slave-Vorrichtung, einer Kommunikationsverbindung mit der zweiten Vorrichtung ferner Folgendes umfasst:
wenn eine Ausnahme auf der zweiten Vorrichtung auftritt, Bestimmen, durch die erste Vorrichtung, der ersten Vorrichtung als eine neue Master-Vorrichtung in dem Kommunikationssystem; und
Herstellen, durch die erste Vorrichtung als die Master-Vorrichtung, einer Kommunikationsverbindung mit einer anderen Vorrichtung in dem Kommunikationssystem, um ein Netz einer Sterntopologiestruktur zu bilden.

13. Verfahren nach Anspruch 12, wobei das Verfahren nach dem Bestimmen, durch die erste Vorrichtung, der ersten Vorrichtung als eine neue Master-Vorrichtung in dem Kommunikationssystem, ferner Folgendes umfasst:
Detektieren (307), durch die erste Vorrichtung, ob ein Laufzustand der ersten Vorrichtung eine voreingestellte Master-Vorrichtungsmigrationsbedingung erfüllt; und
wenn die voreingestellte Master-Vorrichtungsmigrationsbedingung erfüllt wird, Senden, durch die erste Vorrichtung, einer Master-Vorrichtungsmigrationsnachricht an eine andere Vorrichtung in dem Kommunikationssystem.

14. Verfahren nach Anspruch 13, wobei die Master-Vorrichtungsmigrationsbedingung Folgendes umfasst: eine elektrische Quantität der Master-Vorrichtung ist geringer als ein elektrischer Quantitätsschwellenwert; und/oder eine Aufwachdauer der Master-Vorrichtung ist geringer als ein Zeitschwellenwert; und/oder eine Aufwachfrequenz der Master-Vorrichtung ist geringer als ein Frequenzschwellenwert.

15. Elektronische Vorrichtung, umfassend:
einen oder mehrere Prozessoren;
einen Speicher; und
ein Kommunikationsmodul, wobei
der Speicher ein oder mehrere Computerprogramme speichert, das eine oder die mehreren Computerprogramme Anweisungen umfassen und, wenn die Anweisungen durch die elektronische Vorrichtung ausgeführt werden, es der elektronischen Vorrichtung ermöglicht wird, das Vorrichtungsvernetzungsverfahren nach einem der Ansprüche 1 bis 14 durchzuführen.

16. Kommunikationssystem, wobei das Kommunikationssystem eine oder mehrere Vorrichtungen einer ersten Art und eine oder mehrere Vorrichtungen einer zweiten Art umfasst, eine Vorrichtung der ersten Art eine Vorrichtung ist, die durch eine externe Leistungsversorgung versorgt wird, und eine Vorrichtung der zweiten Art eine Vorrichtung ist, die durch eine Batterie versorgt wird; und
wenn eine erste Vorrichtung die elektronische Vorrichtung nach Anspruch 15 ist.

17. Computerlesbares Speichermedium, wobei das computerlesbare Speichermedium Anweisungen speichert und, wenn die Anweisungen auf einer elektronischen Vorrichtung ausgeführt werden, es der elektronischen Vorrichtung ermöglicht wird, das Vorrichtungsvernetzungsverfahren nach einem der Ansprüche 1 bis 14 durchzuführen.

18. Computerprogrammprodukt, umfassend Anweisungen, wobei, wenn das Computerprogrammprodukt auf einer elektronischen Vorrichtung ausgeführt wird, es der elektronischen Vorrichtung ermöglicht wird, das Vorrichtungsvernetzungsverfahren nach einem der Ansprüche 1 bis 14 durchzuführen.

## Revendications

1. Procédé de mise en réseau de dispositifs, comprenant :
la détermination (301), par un premier dispositif, d'un deuxième dispositif en tant que dispositif maître dans un système de communication, dans lequel le deuxième dispositif est un dispositif d'un premier type, le premier dispositif est un dispositif d'un second type, le dispositif du premier type est un dispositif alimenté par une alimentation externe, et le dispositif du second type est un dispositif alimenté par une batterie ;
l'établissement (302), par le premier dispositif en tant que dispositif esclave, d'une connexion de communication avec le deuxième dispositif ;
la détermination (305), par le premier dispositif, d'un troisième dispositif en tant que nouveau dispositif maître dans le système de communication lorsqu'une exception se produit sur le deuxième dispositif, dans lequel le troisième dispositif est un dispositif du second type ; et
l'établissement (306), par le premier dispositif comme étant le dispositif esclave, d'une connexion de communication avec le troisième dispositif.

2. Procédé selon la revendication 1, dans lequel la détermination, par un premier dispositif, d'un deuxième dispositif en tant que dispositif maître dans un système de communication comprend :
le fait de demander, par le premier dispositif, si le système de communication comprend un dispositif du premier type ; et
si le système de communication comprend un dispositif du premier type, la détermination, par le premier dispositif, du deuxième dispositif comme étant le dispositif maître dans des dispositifs du premier type.

3. Procédé selon la revendication 2, dans lequel le premier dispositif stocke une liste d'informations de dispositif, la liste d'informations de dispositif mémorise des informations de dispositif de dispositifs dans le système de communication, et les informations de dispositif comprennent des types de dispositifs ; et
le fait de demander, par le premier dispositif, si le système de communication comprend un dispositif du premier type comprend :
le fait de demander, par le premier dispositif sur la base des types de dispositifs des dispositifs dans la liste d'informations de dispositif, si le système de communication comprend un dispositif du premier type.

4. Procédé selon la revendication 2, dans lequel la détermination, par le premier dispositif, du deuxième dispositif comme étant le dispositif maître dans des dispositifs du premier type comprend :
si les dispositifs du premier type ne comprennent que le deuxième dispositif, la détermination, par le premier dispositif, du deuxième dispositif comme étant le dispositif maître ; ou
si les dispositifs du premier type comprennent une pluralité de dispositifs, la sélection, par le premier dispositif selon un algorithme de décision de dispositif maître prédéfini, du deuxième dispositif parmi la pluralité de dispositifs comme étant le dispositif maître.

5. Procédé selon l'une quelconque des revendications 1 à 4, dans lequel la détermination, par le premier dispositif, d'un troisième dispositif en tant que nouveau dispositif maître dans le système de communication lorsqu'une exception se produit sur le deuxième dispositif comprend :
lorsqu'une exception se produit sur le deuxième dispositif, le fait de demander, par le premier dispositif, si le système de communication comprend un dispositif du premier type ; et
si le système de communication ne comprend pas un dispositif du premier type, la détermination, par le premier dispositif, du troisième dispositif comme étant le nouveau dispositif maître dans des dispositifs du second type.

6. Procédé selon la revendication 5, dans lequel la détermination, par le premier dispositif, du troisième dispositif comme étant le nouveau dispositif maître dans des dispositifs du second type comprend :
la détermination, par le premier dispositif, du troisième dispositif comme étant le nouveau dispositif maître sur la base d'informations de dispositif de dispositifs du second type dans la liste d'informations de dispositif.

7. Procédé selon la revendication 5 ou 6, dans lequel
le troisième dispositif est un dispositif, dans les dispositifs du second type, dont la quantité électrique est supérieure à un seuil de quantité électrique ; et/ou le troisième dispositif est un dispositif, dans les dispositifs du second type, dont la durée de réveil est supérieure à un seuil temporel ; et/ou le troisième dispositif est un dispositif, dans les dispositifs du second type, dont la fréquence de réveil est supérieure à un seuil fréquentiel.

8. Procédé selon l'une quelconque des revendications 1 à 7, dans lequel après l'établissement, par le premier dispositif en tant que dispositif esclave, d'une connexion de communication avec le deuxième dispositif, le procédé comprend également :
l'envoi périodique (303), par le premier dispositif, d'informations de dispositif du premier dispositif au deuxième dispositif, et l'obtention, à partir du deuxième dispositif, d'une liste d'informations de dispositif la plus récente dans le système de communication.

9. Procédé selon la revendication 8, dans lequel un intervalle dans lequel le premier dispositif envoie les informations de dispositif au deuxième dispositif est le même qu'un intervalle de pulsation du premier dispositif.

10. Procédé selon l'une quelconque des revendications 1 à 9, dans lequel après l'établissement, par le premier dispositif en tant que dispositif esclave, d'une connexion de communication avec le deuxième dispositif, le procédé comprend également :
si le premier dispositif reçoit un message d'exception de dispositif maître envoyé par un autre dispositif esclave dans le système de communication, la détermination, par le premier dispositif, du fait qu'une exception se produit sur le deuxième dispositif ; ou
si le premier dispositif détecte que la connexion de communication au deuxième dispositif est déconnectée, la détermination, par le premier dispositif, du fait qu'une exception se produit sur le deuxième dispositif.

11. Procédé selon l'une quelconque des revendications 1 à 10, dans lequel après l'établissement, par le premier dispositif comme étant le dispositif esclave, d'une connexion de communication avec le troisième dispositif, le procédé comprend également :
si le premier dispositif reçoit un message de migration de dispositif maître envoyé par le troisième dispositif, la redétermination, par le premier dispositif, d'un nouveau dispositif maître dans le système de communication.

12. Procédé selon l'une quelconque des revendications 1 à 11, dans lequel après l'établissement, par le premier dispositif en tant que dispositif esclave, d'une connexion de communication avec le deuxième dispositif, le procédé comprend également :
lorsqu'une exception se produit sur le deuxième dispositif, la détermination, par le premier dispositif, du premier dispositif en tant que nouveau dispositif maître dans le système de communication ; et
l'établissement, par le premier dispositif comme étant le dispositif maître, d'une connexion de communication avec un autre dispositif dans le système de communication, pour former un réseau d'une structure de topologie en étoile.

13. Procédé selon la revendication 12, dans lequel après la détermination, par le premier dispositif, du premier dispositif en tant que nouveau dispositif maître dans le système de communication, le procédé comprend également :
le fait de détecter (307), par le premier dispositif, si un état de fonctionnement du premier dispositif satisfait une condition de migration de dispositif maître prédéfinie ; et
si la condition de migration de dispositif maître prédéfinie est satisfaite, l'envoi, par le premier dispositif, d'un message de migration de dispositif maître à un autre dispositif dans le système de communication.

14. Procédé selon la revendication 13, dans lequel la condition de migration de dispositif maître comprend : une quantité électrique du dispositif maître est inférieure à un seuil de quantité électrique ; et/ou une durée de réveil du dispositif maître est inférieure à un seuil temporel ; et/ou une fréquence de réveil du dispositif maître est inférieure à un seuil fréquentiel.

15. Dispositif électronique, comprenant :
un ou plusieurs processeurs ;
une mémoire ; et
un module de communication, dans lequel
la mémoire stocke un ou plusieurs programmes informatiques, les un ou plusieurs programmes informatiques comprennent des instructions, et lorsque les instructions sont exécutées par le dispositif électronique, le dispositif électronique est activé pour réaliser le procédé de mise en réseau de dispositifs selon l'une quelconque des revendications 1 à 14.

16. Système de communication, dans lequel le système de communication comprend un ou plusieurs dispositifs d'un premier type et un ou plusieurs dispositifs d'un second type, un dispositif du premier type est un dispositif alimenté par une alimentation externe, et un dispositif du second type est un dispositif alimenté par une batterie ; et
lorsqu'un premier dispositif est le dispositif électronique selon la revendication 15.

17. Support de stockage lisible par ordinateur, dans lequel le support de stockage lisible par ordinateur stocke des instructions, et lorsque les instructions sont exécutées sur un dispositif électronique, le dispositif électronique est activé pour réaliser le procédé de mise en réseau de dispositifs selon l'une quelconque des revendications 1 à 14.

18. Produit-programme informatique comprenant des instructions, dans lequel lorsque le produit-programme informatique est exécuté sur un dispositif électronique, le dispositif électronique est activé pour réaliser le procédé de mise en réseau de dispositifs selon l'une quelconque des revendications 1 à 14.
